# EUROPEAN PATENT APPLICATION

(11) **EP 3 528 197 A1**
(43) Date of publication of application: **21.08.2019**
(21) Application number: 17859617.7
(22) Date of filing: 11.10.2017
(51) Int. Cl.: G06Q 50/04, G05B 19/418

(54) **GARMENT MANUFACTURING MANAGEMENT DEVICE, GARMENT MANUFACTURING MANAGEMENT METHOD, GARMENT ORDER RECEPTION/MANUFACTURING SYSTEM, AND PROGRAM**

(30) Priority: 12.10.2016 JP 2016201230; 31.01.2017 JP 2017015926
(71) Applicant: Spiber Inc., Yamagata 997-0052 (JP)
(72) Inventor: SEKIYAMA, Kazuhide, Tsuruoka-shi Yamagata 997-0052 (JP); HATTORI, Ryo, Tsuruoka-shi Yamagata 997-0052 (JP); UHIRA, Goshi, Tsuruoka-shi Yamagata 997-0052 (JP)
(74) Representative: Plougmann Vingtoft a/s
(86) International application number: PCT/JP2017/036798
(87) International publication number: WO 2018/070415

(57) **Abstract**

In a garment production management apparatus 1, a garment information acquisition part 31 acquires garment information to specify a garment an orderer has selected. A body shape information acquisition part 32 acquires body shape information of a wearer who wears the garment. A production information acquisition part 33 acquires the production information of the garment on the basis of the garment information and the body shape information. A production information output part 34 outputs the production information to a seamless knitting machine. Here, the production information acquisition part 33 may select production information from among a plurality of different pieces of production information associated with the garment information or modify the production information that serves as a base of the garment associated with the garment information on the basis of the body shape information.

## Description

### [Technical Field]

This invention relates to a garment production management apparatus, a garment production management method, a garment made-to-order system, and a program.

### [Background Art]

Conventionally, a technique that receives body measurements for a consumer and compares the consumer's usual size with the sizes determined by a garment's manufacturer in order to select the garment most likely to fit the consumer is disclosed.

### [Prior Art]

### [Patent Document]

Patent Document 1: United Sates Patent Publication No. 2006/0287877

### [Summary of Invention]

### [Problems to be Solved by Invention]

According to the technique described above, consumers can find garments that fit their own body dimensions. Here, there are wide variations in consumers' body dimensions and shapes, and tastes in garments vary from consumer to consumer. Accordingly, each manufacturer needs to prepare garments in various sizes and designs in order to meet diverse needs of consumers. Due to this, many garments are said to be in deadstock and discarded.

This invention focuses on these points, and an object of the present invention is to provide a technique that reduces waste in production and distribution processes of garments.

### [Means for Solving the Problems]

The first aspect of the present invention is a garment production management apparatus. This apparatus includes a garment information acquisition part that acquires garment information to specify a garment an orderer has selected; a body shape information acquisition part that acquires body shape information of a wearer who wears the garment; a production information acquisition part that acquires production information of the garment on the basis of the garment information and the body shape information; and a production information output part that outputs the production information to a seamless knitting machine.

The production information acquisition part may select production information from among a plurality of different pieces of production information associated with the garment information.

The production information acquisition part may modify the production information that serves as a base of the garment associated with the garment information on the basis of the body shape information.

The production information acquisition part may select production information on the basis of the body shape information from among a plurality of different pieces of production information that is associated with the garment information, and modify the selected production information on the basis of the body shape information.

The body shape information acquisition part may acquire height, weight, and gender of the wearer as the body shape information via a communication terminal of the orderer.

The body shape information acquisition part may further acquire age of the wearer via the communication terminal of the orderer.

The body shape information acquisition part may further acquire body fat percentage of the wearer via the communication terminal of the orderer.

The body shape information acquisition part may further acquire the number of weeks of pregnancy of the wearer via the communication terminal of the orderer.

The body shape information acquisition part may further acquire physical features of the wearer via the communication terminal of the orderer.

The production information acquisition part may select (i) pieces of production information that match the body shape information from among different pieces of production information associated with the garment information and (ii) pieces of image data of garments that correspond to the selected pieces of production information, and may select one piece of production information that corresponds to one piece of image data out of the pieces of image data that the orderer selected from among the pieces of image data transmitted to the communication terminal of the orderer.

The production information may include position coordinates in three-dimensional space of each part of the garment, and the production information acquisition part may include: a body surface coordinate calculation part that calculates position coordinates in the three-dimensional space of a body surface of the wearer; a difference data calculation part that calculates difference data between (i) the position coordinates of each part of the garment and (ii) position coordinates of the body surface that correspond to the position coordinates; and a modification part that modifies the production information of the garment on the basis of the difference data.

The garment production management apparatus may further include: a worn garment image acquisition part that acquires a worn garment image in a case where the garment, produced on the basis of the production information, is worn by a model acquired on the basis of the body shape information; and an image transmission part that transmits the worn garment image to the communication terminal of the orderer.

The worn garment image acquisition part may generate a worn garment image by superimposing the garment image generated on the basis of the production information on an avatar image generated on the basis of the body shape information.

The garment production management apparatus may further includes: a material cost calculation part that calculates material cost of the garment on the basis of the production information; a price determination part that determines the price of the garment on the basis of the material cost and type of the seamless knitting machine that is used to manufacture the garment.

The garment production management apparatus may further include: a measurement value acquisition part that acquires a measurement value of material obtained by measuring the material to be used for manufacturing the garment; and a setting changing part that changes parameters to be set to the seamless knitting machine in order to manufacture the garment on the basis of variations of measurement values.

The garment production management apparatus may further include: a material management part that outputs instructions for adding materials to the seamless knitting machine to the material supply apparatus when the weight of yarns acquired by the measurement value acquisition part becomes equal to or less than a predetermined weight.

The material used for manufacturing the garment may be yarn, the measurement value acquisition part may acquire a plurality of measurement values that includes measurement positions of the yarn, and the setting changing part may change the parameters on the basis of the measurement values that correspond to the measurement positions of the yarn supplied to a knitting portion in the seamless knitting machine.

The measurement value acquisition part may acquire measurement values from the beginning to the end of the yarn in advance for each unit amount required to manufacture individual garment, and the setting change part may change the parameters every time the individual garment is manufactured on the basis of the measurement values for each unit amount required to manufacture the garment.

The measurement value acquisition part may acquire the measurement values of yarn at a position before the knitting portion while the yarn is supplied to the knitting portion, and the setting change part may change the parameters while the measurement value acquisition part acquires the measurement values.

The measurement value acquisition part may acquire the measurement value of the material in an environment where the seamless knitting machine for manufacturing garments is set.

The second aspect of the present invention is a garment production management method. This method is performed by a processor, and includes steps of: acquiring garment information to specify a garment an orderer has selected; acquiring body shape information of a wearer who wears the garment; acquiring the production information of the garment on the basis of the garment information and the body shape information; and outputting the production information to a seamless knitting machine.

The third aspect of the present invention is a program that causes a computer to perform functions of: acquiring garment information to specify a garment an orderer has selected; acquiring body shape information of a wearer who wears the garment; acquiring the production information of the garment on the basis of the garment information and the body shape information; and outputting the production information to a seamless knitting machine

The fourth aspect of the present invention is a garment made-to-order system, including: a garment production management apparatus that can communicate with communication terminals of each of a plurality of orderers; a seamless knitting machine control apparatus that can communicate with the garment production management apparatus; and a plurality of seamless knitting machines that operate under control of the seamless knitting machine control apparatus. Here, the garment production management apparatus includes: a garment information acquisition part that acquires garment information to specify a garment each of the orderers has selected via the communication terminals; a body shape information acquisition part that acquires body shape information of a wearer who wears the garment via the communication terminals; a production information acquisition part that acquires the production information of the garment on the basis of the garment information and the body shape information; and a production information output part that outputs the production information to a seamless knitting machine. The seamless knitting machine control apparatus includes: a receiving part that receives the production information from the garment production management apparatus; a selection part that selects a seamless knitting machine that manufactures the garment on the basis of the production information from among the plurality of seamless knitting machines; and an output part that outputs the production information to the selected seamless knitting machine. Each of the plurality of seamless knitting machines manufactures garments on the basis of the production information received from the seamless knitting machine control apparatus.

The garment made-to-order system may further include: a product management apparatus that associates garments that the seamless knitting machine manufactured with pieces of orderer information for uniquely specifying each of the orderers.

The product management apparatus, if the orderer provides the garment that the seamless knitting machine manufactured in the past so as to be used as materials for recycling, may manage the provided garment and orderer information of the orderer in association with each other.

It should be noted that any combination of the above-described constituent elements, and an aspect obtained by converting the expression of the present invention among methods, devices, systems, computer programs, data structures, recording media, and the like are also effective as an aspect of the present invention.

### [Effect of the Invention]

According to the present invention, waste in production and distribution processes of garments can be reduced.

### [Brief Description of the Drawings]

FIG. 1 is a schematic diagram showing an outline of a garment made-to-order system according to the embodiment.
FIG. 2 is a schematic diagram showing a functional configuration of a garment production management apparatus.
FIG. 3 is a schematic diagram showing an example of a body shape information input screen displayed on a communication terminal of an orderer.
FIG. 4 is a schematic diagram showing a data structure of a production information database according to the embodiment.
FIG. 5 is a schematic diagram showing a functional configuration of a production information acquisition part according to the embodiment.
FIGS. 6A and 6B are each a schematic diagram illustrating position coordinates relating to garment production.
FIG. 7 illustrates difference data calculation processing executed by a difference data calculation part according to the embodiment.
FIG. 8 is a schematic diagram showing an example of a screen of the communication terminal displaying an image of a garment being worn (hereinafter, a worn garment image) transmitted by an image transmission part.
FIG. 9 is a flowchart illustrating a garment production management process executed by the garment production management apparatus according to the embodiment.
FIG. 10 is a schematic diagram showing a functional configuration of a seamless knitting machine control apparatus.
FIG. 11 is a schematic diagram showing a data structure of a history management database according to the embodiment.
FIG. 12 is a schematic diagram mainly showing the periphery of the seamless knitting machine of the garment made-to-order system according to Variation Example 4 of the embodiment.
FIG. 13 is a schematic diagram showing a functional configuration of a garment production management apparatus according to Variation Example 4 of the embodiment.
FIG. 14 is a table showing a relationship between measurement values of yarns, which are materials, and changes in parameters set to the seamless knitting machine.

### [Detailed Description of the Invention]

### <Outline of the Embodiment>

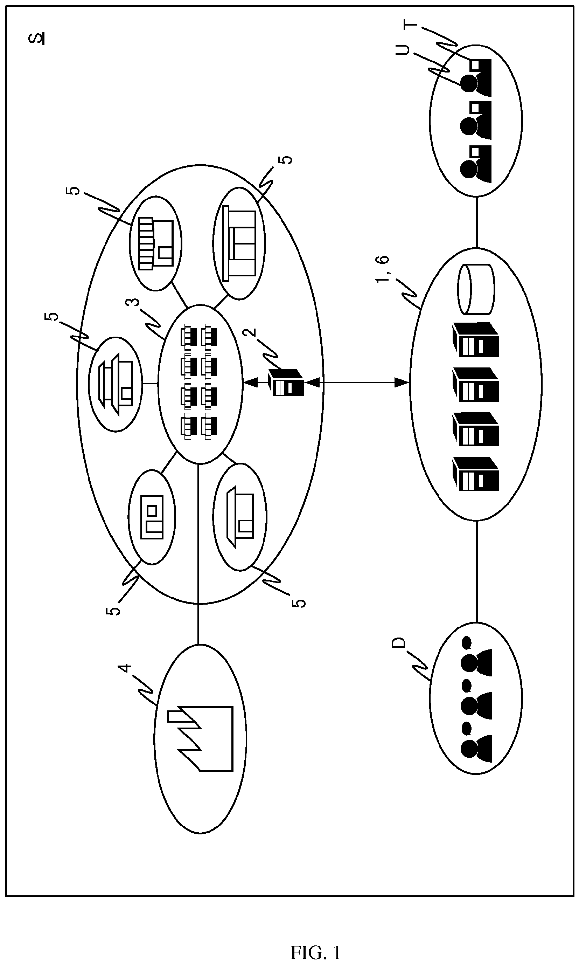

An outline of the embodiment will be explained by referring to FIG. 1. FIG. 1 is a schematic diagram showing an outline of a garment made-to-order system S according to the embodiment. The garment made-to-order system S includes a garment production management apparatus 1, a seamless knitting machine control apparatus 2, a seamless knitting machine 3, a plant 4, a store 5, and a product management apparatus 6.

The garment production management apparatus 1 communicates with each communication terminal T of a plurality of orderers U via a network such as the Internet. In a communicable manner, the garment production management apparatus 1 is also connected to an information terminal of a designer D of garments that the garment production management apparatus 1 handles. The garment production management apparatus 1 is connected also to the seamless knitting machine control apparatus 2 in a communicable manner.

The garment production management apparatus 1 acquires, from the communication terminal T of an orderer U, information about a garment the orderer U wishes to purchase, body shape information of a wearer, and information about a delivery destination or a delivery location of the garment. On the basis of the body shape information acquired from the orderer U, the garment production management apparatus 1 acquires production information for manufacturing the garment that the orderer U wishes to purchase. Here, a wearer and the orderer U may be the same, or if the orderer U places an order for the garment with an intention to let someone other than himself/herself wear it, such as a gift to his/her friend or family member, the wearer and the orderer U may be different.

The seamless knitting machine control apparatus 2 can communicate with one or more seamless knitting machines 3 and controls an operation of each seamless knitting machine 3. On the basis of the production information of the garment acquired from the garment production management apparatus 1, the seamless knitting machine control apparatus 2 selects a seamless knitting machine 3 to be used for manufacturing that garment. Next, the seamless knitting machine control apparatus 2 transmits the production information to the selected seamless knitting machine 3 and makes the seamless knitting machine 3 manufacture the garment. It should be noted that it is preferable for the seamless knitting machine control apparatus 2 to select the seamless knitting machine 3 installed at a location closest to a delivery destination or a delivery location of the manufactured garment from among the seamless knitting machines 3 that can manufacture a garment which is specified with the information about the garment acquired from the garment production management apparatus 1. By doing this, the time required from the production of garment to the delivery of the garment to the orderer U is reduced.

In a case where the seamless knitting machine 3 installed at the location closest to the delivery destination or the delivery location of the manufactured garment has a high work rate and concentrated load, the seamless knitting machine control apparatus 2 may select another seamless knitting machine 3 installed near the delivery destination or the delivery location.

The seamless knitting machine 3 is an apparatus that knits the garments on the basis of the production information received from the seamless knitting machine control apparatus 2 and uses, as raw materials, fibers and the like that contain a structural protein and are made in the plant 4. Because the seamless knitting machine 3 can knit a garment three-dimensionally in one entire piece, the process of cutting out each part from fabrics and sewing them together (cut-and-sewn process) is basically unnecessary. Because no material is discarded due to cutting, the garments that are manufactured by the seamless knitting machine 3 create little waste.

Also, in FIG. 1, the store 5 is a store that provides the garment manufactured by the seamless knitting machine 3 to the orderer U. A specific example of the store 5 is a laundromat, a convenience store, or various kinds of shopping centers. Another example of the store 5 is a distribution center of a shipping carrier or the like. In the former case, the orderer U receives the garment over a counter of the store 5. In the latter case, the orderer U can have the ordered garment delivered to the designated place such as the orderer U's home. In either case, it is preferable to install the seamless knitting machine 3 according to the embodiment in the store 5 or an adjoining site of the store 5. By doing this, the time required from the production of garment to the delivery of the garment to the orderer U is reduced.

As described above, the seamless knitting machine 3 knits the garment in one entire piece from the raw materials. Which means that, by unravelling the garment knit by the seamless knitting machine 3, its raw materials can be recycled. In some cases, by dissolving the garment at the plant 4, the garment may be reused as raw materials or resources. In order to realize this, in the garment made-to-order system S according to the embodiment, the store 5 also functions as a recycling center which receives a garment for recycling from the orderer U. By providing a mechanism for recycling the raw materials of garments, the garment made-to-order system S according to the embodiment reduces waste of raw materials due to disposal of garments.

Accordingly, an operator of the garment made-to-order system S does not need to stock any garments, because the garment made-to-order system S according to the embodiment adopts a made-to-order production in which the manufacturing of a garment is triggered when the orderer U places a purchase order for the garment. Consequently, deadstock of garments can be reduced.

Generally, the same type of garments of the same brand are often sold for a fixed price regardless of their sizes. The material cost of the small size garment should be lower compared to that of the large size garment because fewer raw materials are used for the small size garment compared to the large size garment, but such a difference is seldom reflected in the price. In contrast, in the garment made-to-order system S according to the embodiment, the garment production management apparatus 1 changes the production information depending on size information of the wearer of the garment. For this reason, the garment production management apparatus 1 can calculate a total amount of materials required for the production of a garment. This eventually increases the sense of fairness which the orderers U may feel regarding the price determination, because the garment production management apparatus 1 according to the embodiment determines a price that reflects the material cost of the garment.

Accordingly, the garment made-to-order system S according to the embodiment reduces stock with the made-to-order production and reduces waste of materials by knitting the ordered garments using the seamless knitting machine. Furthermore, the garment made-to-order system S provides a mechanism for recycling unwanted garments into other garments. By doing this, the garment made-to-order system S according to the embodiment can reduce waste in production and distribution processes of garments.

Hereinafter, the garment production management apparatus 1 included in the garment made-to-order system S will be described in more detail. It should be noted that a product management apparatus 6 will be described below.

### <Functional configuration of the garment production management apparatus 1>

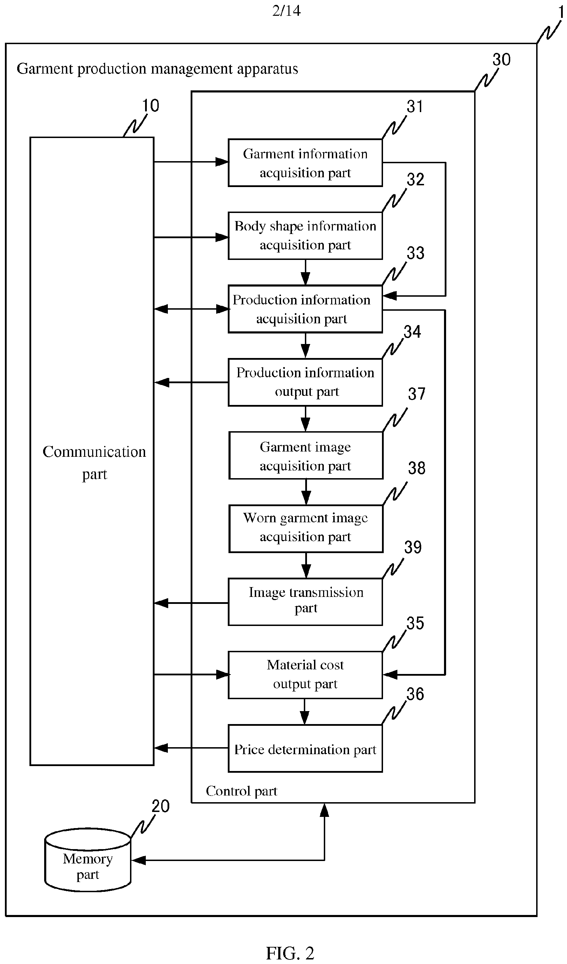

FIG. 2 is a schematic diagram showing a functional configuration of the garment production management apparatus 1 according to the embodiment. The garment production management apparatus 1 according to the embodiment is realized by calculation resources of cloud computing such as a cloud server. The garment production management apparatus 1 includes a communication part 10, a memory part 20, and a control part 30.

The communication part 10 is a communication interface that allows the garment production management apparatus 1 to communicate with the communication terminal T of the orderer U and with the seamless knitting machine control apparatus 2. The communication part 10 is realized by known communication modules, for example, a Wi-Fi (registered trademark) module, a local area network (LAN) module, and the like.

The memory part 20 is a mass-storage device such as a hard disc drive (HDD) or a solid state drive (SSD) that stores (i) a read only memory (ROM) which stores basic programs, and the like, (ii) a random access memory (RAM) which is a work area of the garment production management apparatus 1, and (iii) base information on production information for manufacturing garments, various types of images, and the like.

The control part 30 includes a processor such as a central processing unit (CPU) or a graphics processing unit (GPU) of the garment production management apparatus 1, and functions as a garment information acquisition part 31, a body shape information acquisition part 32, a production information acquisition part 33, a production information output part 34, a material cost output part 35, a price determination part 36, a garment image acquisition part 37, a worn garment image acquisition part 38, and an image transmission part 39 by executing programs stored in the memory part 20.

### [Inputting body shape information]

From the communication terminal T of the orderer U, the garment information acquisition part 31 acquires, via the network, garment information to specify the garment the orderer U has selected. The body shape information acquisition part 32 acquires body shape information of a wearer who wears the garment that the orderer U has selected. Here, the "garment information" represents information indicating tastes of the wearer (information that includes, for example, colors, fit preference, texture, materials, trends, dress code category, sleeve length, body length, neckline styles, width of ribs, knitting method, etc.) in addition to information to specify the shape of garment. The "body shape information" represents information indicating a body size and shape of the wearer of the garment.

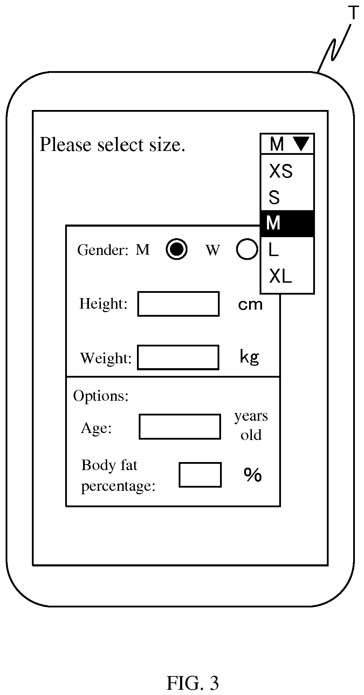

FIG. 3 is a schematic diagram showing an example of a body shape information input screen displayed on the communication terminal T of the orderer U. The communication terminal T is realized by a terminal, for example, a smartphone, a tablet, a phablet, a portable game console, a laptop personal computer (PC), and the like. FIG. 3 shows an example where a smartphone is used as the communication terminal T.

As shown in FIG. 3, via the communication terminal T, the orderer U selects one size from among a plurality of types of sizes determined beforehand. The example of FIG. 3 shows the orderer U has selected a medium (M) size from a pull-down menu. The size selected by the orderer U is a piece of information indicating the body size of the wearer and is a type of the body shape information

In place of or in addition to the size of the garment, the orderer U may input height, weight, and gender of the wearer. Further, the orderer U may optionally input (i) age or date of birth and (ii) body fat percentage of the wearer. Since the height of the wearer directly indicates the body size of the wearer, it is the body shape information. Also, since the weight, gender, age, and body fat percentage of the wearer serve as clues to estimate the shape of the body of the wearer, they can be the body shape information.

In addition, when a wearer is pregnant, the body shape information acquisition part 32 may acquire the weeks of pregnancy of the wearer via the communication terminal T of the orderer U. Since the number of weeks of pregnancy also serves as a clue to estimate the shape of the body of the wearer, it can be the body shape information. Also, the body shape information acquisition part 32 may acquire physical features of the wearer as optional information from the orderer U. Here, the "physical features" are body shape information unique to the wearer and difficult to express with general statistical processing. An example of the physical features is information about left-right asymmetric properties of the wearer's body. For example, if a length of the wearer's left hand is longer than that of the right hand, that piece of information is the body shape information unique to the wearer and therefore be a physical feature. When a wearer may be one-armed for some reason, that piece of information is the body shape information unique to the wearer and is therefore a physical feature.

It should be noted that if the orderer U has already provided the body shape information of the wearer to another system different from the garment made-to-order system S according to the embodiment, the body shape information acquisition part 32 may acquire the body shape information from that other system. In that case, the body shape information acquisition part 32 should acquire, from the communication terminal T of the orderer U, (i) access information such as a uniform resource locator (URL) or the like of the system that would furnish the body shape information of the wearer, (ii) information on access rights such as a password and a user name of the orderer U for that system, and (iii) information for specifying the wearer.

As the body shape information, the body shape information acquisition part 32 may further acquire measurement data of the wearer's body dimensions measured at a brick-and-mortar shop such as a tailor. To realize this, the body shape information obtained by measuring should be stored into the communication terminal T of the orderer U or the wearer, and then have the body shape information acquisition part 32 acquire that piece of information via a network N.

### [Acquiring the production information]

With reference to FIG. 2 again, the production information acquisition part 33 acquires the production information of the garment on the basis of the garment information and the body shape information. Here, the "production information" is a generic term for pieces of information needed for the seamless knitting machine 3 to manufacture garments. Specifically, the production information is information for specifying a seamless knitting machine 3 to be used for manufacturing garments, and information including steps for the seamless knitting machine 3 to knit garments, kinds of materials, color of materials, and the like.

When the body shape information acquisition part 32 acquires, as the body shape information, garment size information from the communication terminal T of the orderer U, the production information acquisition part 33 selects one piece of production information on the basis of the garment size information that is associated with the garment information from among a plurality of pieces of production information of the same garment in different sizes. The sizes of the garments are so-called standard sizes, and the operator of the garment made-to-order system S can set production information that serves as a few bases corresponding to the types of sizes of garments in advance. The production information acquisition part 33 can acquire the production information by selecting the production information that matches the garment size information acquired by the body shape information acquisition part 32 from among the production information set in advance.

### [Selecting from many pieces of production information prepared in advance]

Meanwhile, if the body shape information acquisition part 32 acquires, as the body shape information, at least the height, weight, and gender of the wearer from the communication terminal T of the orderer U, the production information acquisition part 33 may acquire the production information that matches the body shape of the wearer from among many pieces of production information prepared in advance. That is, instead of selecting from among a few pieces of standardized production information such as the above-mentioned garment size information, the production information acquisition part 33 may acquire the production information that matches the body shape of the wearer from among patterns of many pieces of production information prepared in advance.

Here, the "many pieces of production information prepared in advance" is not a few pieces of standardized production information but represents production information set in accordance with more detailed differences in the wearer's body shape (for example, height, weight, gender, length of an arm or a leg, shoulder width, etc.) and/or difference in design (for example, sleeve length, body length, neckline styles, width of ribs, etc.) of the same product. Several patterns may suffice as the number of pieces of production information, but considering the above-mentioned body shape and design as well as the number of combinations of tastes, it is preferable to have more than a dozen patterns up to several dozens of patterns. In order to further increase the number of variations, more than 100 patterns of production information may be prepared.

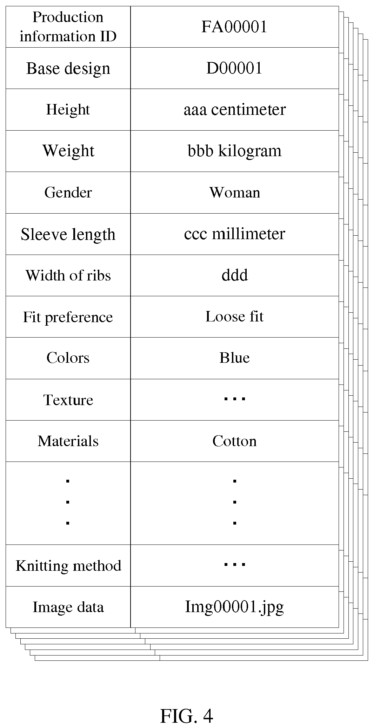

FIG. 4 is a schematic diagram showing a data structure of a production information database according to the embodiment. The production information database is stored in the memory part 20 and referenced by the production information acquisition part 33. As shown in FIG. 4, the production information database according to the embodiment stores variations that correspond to the body shape and the tastes of the wearer for each design, serving as the base, together with image data of a finished garment. The number of pieces of production information stored in the production information database has, although not limited to this, five digits.

FIG. 4 shows that production information that is specified by a production information identification (ID) FA00001 is a variation of a garment whose base design is specified with an identifier D00001. Also, an image of a garment produced on the basis of the production information specified by the production information ID FA00001 is specified by image data Img00001.jpg.

The production information acquisition part 33 selects production information that matches the information acquired by the body shape information acquisition part 32 from among patterns of a plurality of pieces of production information. Here, if the production information acquisition part 33 cannot narrow down pieces of production information to one since the information that the body shape information acquisition part 32 acquired is little, the production information acquisition part 33 selects and acquires several pieces of production information that match the information acquired by the body shape information acquisition part 32. In this case, the production information acquisition part 33 also acquires pieces of image data of garments that correspond to the selected several pieces of production information and transmits the image data of garments to the communication terminal T of the orderer U.

If the image data of the plurality of garments is acquired from the production information acquisition part 33, not shown though, the communication terminal T of the orderer U displays the image data on a display part of the communication terminal T in a selectable manner. When the orderer U selects one piece of image data out of the pieces of image data of the garments displayed on the display part of the communication terminal T, the communication terminal T transmits that information to the production information acquisition part 33. The production information acquisition part 33 acquires, as final production information, the production information that corresponds to the acquired information.

For example, if the information acquired by the body shape information acquisition part 32 includes no information on colors of garment, the production information acquisition part 33 cannot narrow down color variations of the production information stored in the production information database. Accordingly, the number of pieces of production information that the production information acquisition part 33 acquires from the production information database in order to have the orderer U select the image data may be about 10 to 100, depending on the amount of information the body shape information acquisition part 32 has acquired.

Accordingly, the production information acquisition part 33 selects (i) pieces of production information that match the body shape information from among different pieces of production information associated with the garment information and (ii) pieces of image data of garments that correspond to the selected pieces of production information, and selects, as the final production information, one piece of production information that corresponds to one piece of image data from among the plurality of pieces of image data that was displayed on the communication terminal T and selected by the orderer U. By doing this, while saving the trouble of selecting a favorite garment from a huge number of garments, the orderer U, unleashed from the conventional concept of size, can more easily purchase the garment that fits the body shape of the wearer. Because processing to be executed by the production information acquisition part 33 is just a process of selecting from the production information prepared in advance, it is possible to economize on calculation resources of the garment production management apparatus 1.

### [Modifying the production information]

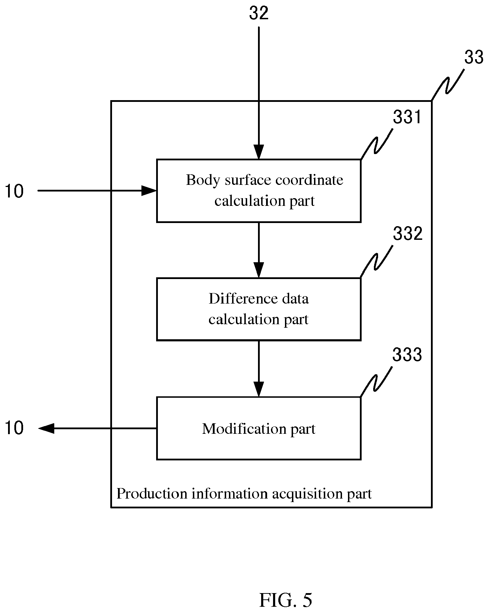

Furthermore, if the body shape information acquisition part 32 acquires, as the body shape information, at least height, weight, and gender from the communication terminal T of the orderer U, the production information acquisition part 33 may modify, on the basis of the body shape information, the production information that serves as the base of the garment associated with the garment information. That is, the production information acquisition part 33 modifies the production information in, so to speak, "custom-made" manner depending on the body shape information acquired by the body shape information acquisition part 32. Hereinafter, modification processing of the production information by the production information acquisition part 33 according to the embodiment will be described by referring to FIGS. 5, 6A, 6B, and 7.

FIG. 5 is a schematic diagram showing a functional configuration of the production information acquisition part 33 according to the embodiment. The production information acquisition part 33 includes a body surface coordinate calculation part 331, a difference data calculation part 332, and a modification part 333. It should be noted that FIG. 5 shows only the functional configuration of the production information acquisition part 33 according to the embodiment for modifying the production information, and other configurations are omitted.

As described above, the seamless knitting machine 3 according to the embodiment knits a garment three-dimensionally in one entire piece. For this reason, the production information includes position coordinates in three-dimensional space of each part of the garment or information for calculating those position coordinates. The body surface coordinate calculation part 331 calculates the position coordinates in three-dimensional space of a body surface of the wearer based on the body shape information acquired by the body shape information acquisition part 32. The difference data calculation part 332 first calculates the position coordinates in three-dimensional space of each part of the garment on the basis of the production information of the garment that serves as a base. Then, the difference data calculation part 332 calculates difference data between (i) the position coordinates of each part of the garment and (ii) position coordinates of the body surface that correspond to the position coordinates of each part of the garment.

It should be noted that the "production information of the garment that serves as a base," to which the production information acquisition part 33 refers, may be (i) production information for manufacturing garments in the standardized sizes such as S/M/L or (ii) a piece of production information that the production information acquisition part 33 finally selected from among variations of many pieces of production information.

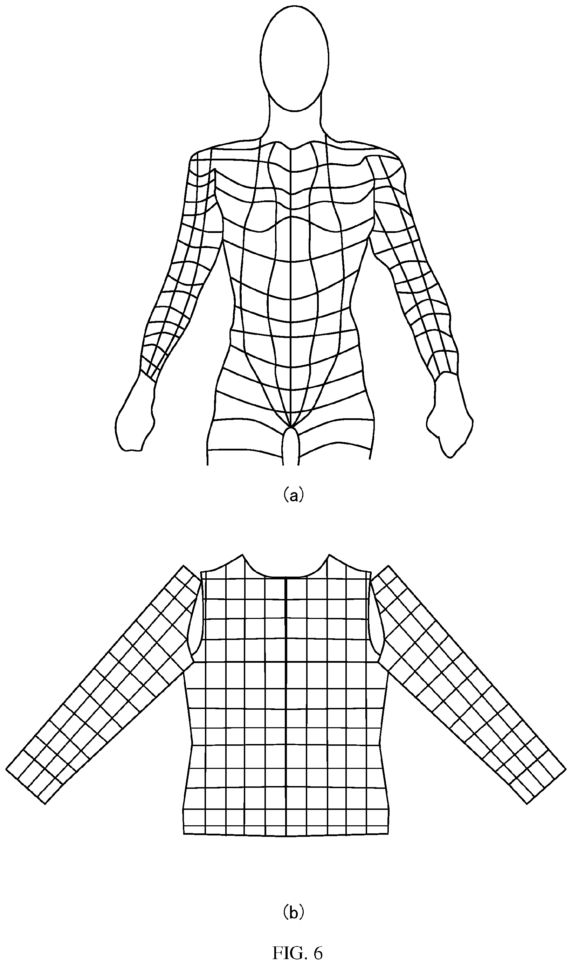

FIGS. 6A and 6B are each a schematic diagram illustrating position coordinates relating to garment production. Specifically, FIG. 6A shows the position coordinates in three-dimensional space of the body surface of the wearer calculated by the body surface coordinate calculation part 331. Also, FIG. 6B shows the position coordinates in three-dimensional space of each part of the garment calculated by the difference data calculation part 332.

FIG. 6A shows the body surface of a wearer when a human body is represented in a wireframe model. Solid lines in FIG. 6A indicate wires that model the human body of the wearer. In order to avoid complication, not all wires are shown in FIG. 6A, but the body surface coordinate calculation part 331 calculates position coordinates of intersections of different wires as the position coordinates of the body surface of the wearer.

FIG. 6B shows, although not entirely, three-dimensional "mesh" of the garment. The difference data calculation part 332 calculates, as the position coordinates in three dimensional space of each part of the garment, position coordinates of mesh of the garment or position coordinates of intersections of yarns, which are materials of the garment.

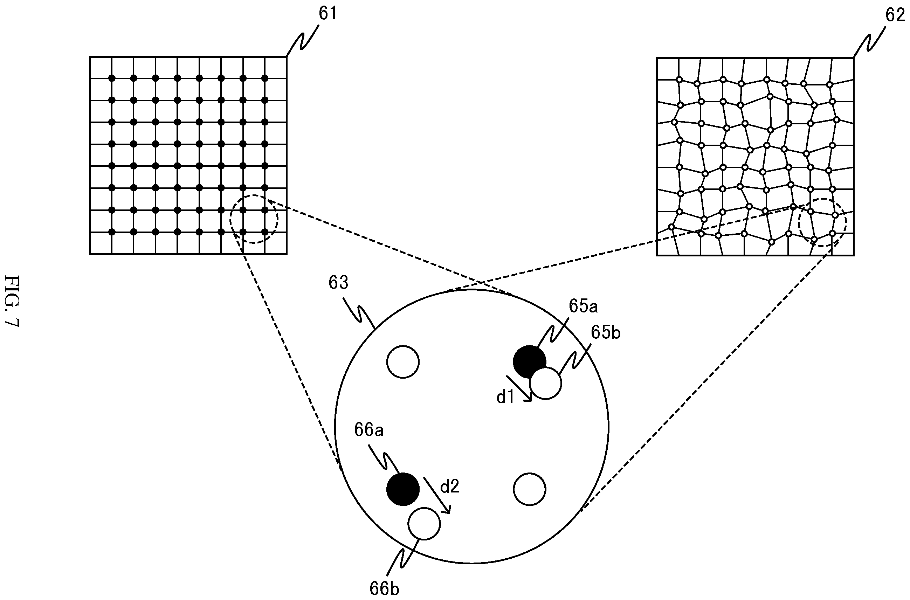

FIG. 7 illustrates difference data calculation processing executed by the difference data calculation part 332 according to the embodiment. In FIG. 7, a mesh denoted by a reference number 61 indicates a base mesh 61 that indicates the position coordinates of each part of the garment in the production information that serves as the base. Black circles in the figure indicate the position coordinates of each part of the garment in the base mesh 61. It should be noted that although the position coordinates of each part of the garment are the position coordinates in three-dimensional space, for convenience in the drawing of FIG. 7, the position coordinates of each part of the garment are shown condensed into two-dimensional space.

In FIG. 7, a mesh denoted by a reference number 62 indicates a modified mesh 62 when the position coordinates of the base mesh 61 are moved to corresponding position coordinates on the body surface of the wearer. White circles in the figure indicate the position coordinates after the movement.

In FIG. 7, a partial enlarged view 63 denoted by a reference number 63 shows a view in which a partial region of the base mesh 61 and a region of the modified mesh 62 that corresponds to that partial region of the base mesh 61 are enlarged and overlapped. In the partial enlarged view 63, a black circle 65a on the base mesh 61 is moved to a position of a white circle 65b. Similarly, a black circle 66a on the base mesh 61 is moved to a position of a white circle 66b. The difference data calculation part 332 calculates, as difference data of the black circle 65a on the base mesh 61, a position vector d1 of the white circle 65b, with the black circle 65a as its origin. The difference data calculation part 332 also calculates, as difference data of the black circle 66a on the base mesh 61, a position vector d2 of the white circle 65b, with the black circle 66a as its origin.

The modification part 333 modifies the production information of the garment on the basis of the difference data calculated by the difference data calculation part 332. By doing this, the modification part 333 can generate production information for manufacturing a garment that fits the body shape of the wearer of the garment.

It should be noted that, when the body shape information acquisition part 32 further acquires the body fat percentage as the body shape information of the wearer via the communication terminal T of the orderer U, the body surface coordinate calculation part 331 calculates the position coordinates of the body surface of the wearer in consideration of the standard body shape of the human body for that body fat percentage. Because accuracy of modeling of a human body can be further improved, the body surface coordinate calculation part 331 can calculate position coordinates with a higher precision.

When the body shape information acquisition part 32 has acquired the optional information such as the height, weight, gender, and the like of the wearer in addition to the garment size information, the production information acquisition part 33 first selects one piece of production information on the basis of the garment size information from among the different pieces of production information that are associated with the garment information. Then, using the selected production information as the production information that serves as the base, the production information is modified in consideration of the optional information. This enables production information for manufacturing a garment close to the body shape of the wearer to be the production information that serves as the base, the production information output part 34 can reduce the amount of modifications of the production information. Consequently, the garment production management apparatus 1 can suppress a calculation cost required to modify the production information and reduce occurrences of distortion of designs of the produced garments. The same is true of the cases where the body shape information acquisition part 32 has acquired the age, the number of weeks of pregnancy, and other physical features of the wearer.

### [Determining cost of a garment]

With reference to FIG. 2 again, the production information output part 34 outputs the production information acquired by the production information acquisition part 33 to the seamless knitting machine 3 via the seamless knitting machine control apparatus 2. The material cost output part 35 calculates the material cost of the garment required to manufacture the garment on the basis of the production information acquired by the production information acquisition part 33. The price determination part 36 determines the price of the garment on the basis of (i) the material cost calculated by the material cost output part 35 and (ii) types of seamless knitting machines 3 that are used to manufacture the garment.

Depending on the shape and size, or on the types of materials of a garment, there may be cases where the special seamless knitting machine 3 is required for manufacturing such a garment. Since introduction costs and running costs of the seamless knitting machines 3 differ depending on their types, the type of seamless knitting machine 3 to be used for manufacturing a garment is reflected in the price of that garment.

Before the seamless knitting machine 3 actually manufactures a garment, the price determination part 36 may transmit the determined price to the communication terminal T of the orderer U. This enables the orderer U to know the price of the garment he/she ordered beforehand. By seeing the price transmitted by the price determination part 36, the orderer U may change the shape, materials, and the like of the garment depending on his/her budget.

### [Acquiring a garment image]

The production information acquisition part 33 modifies the production information of the garment on the basis of the body shape information of the wearer. For this reason, if an image of the garment after the modification can be visualized and provided to the orderer U, that can motivate the orderer U to purchase the garment. For this reason, the garment production management apparatus 1 includes a garment image acquisition part 37, a worn garment image acquisition part 38, and an image transmission part 39.

The garment image acquisition part 37 acquires a garment image based on the production information acquired by the production information acquisition part 33. The worn garment image acquisition part 38 acquires a worn garment image in a case where the garment is worn by the model acquired on the basis of the body shape information.

Specifically, the memory part 20 stores (i) images of a plurality of garments in different sizes and shapes and (ii) images of each garment being worn by models of various body shapes. Among the garment images stored in the memory part 20, the garment image acquisition part 37 acquires a garment image of the garment whose size and shape are close to the garment to be manufactured on the basis of the production information acquired by the production information acquisition part 33. The worn garment image acquisition part 38 acquires a worn garment image that is an image in which the garment, whose size and shape are close to the garment to be manufactured on the basis of the production information acquired by the production information acquisition part 33, is worn by a model with a body shape close to the body shape information acquired by the body shape information acquisition part 32.

The image transmission part 39 transmits the worn garment image acquired by the worn garment image acquisition part 38 to the communication terminal T of the orderer U via the communication part 10. At this time, the image transmission part 39 may transmit the worn garment image together with the garment image acquired by the garment image acquisition part 37.

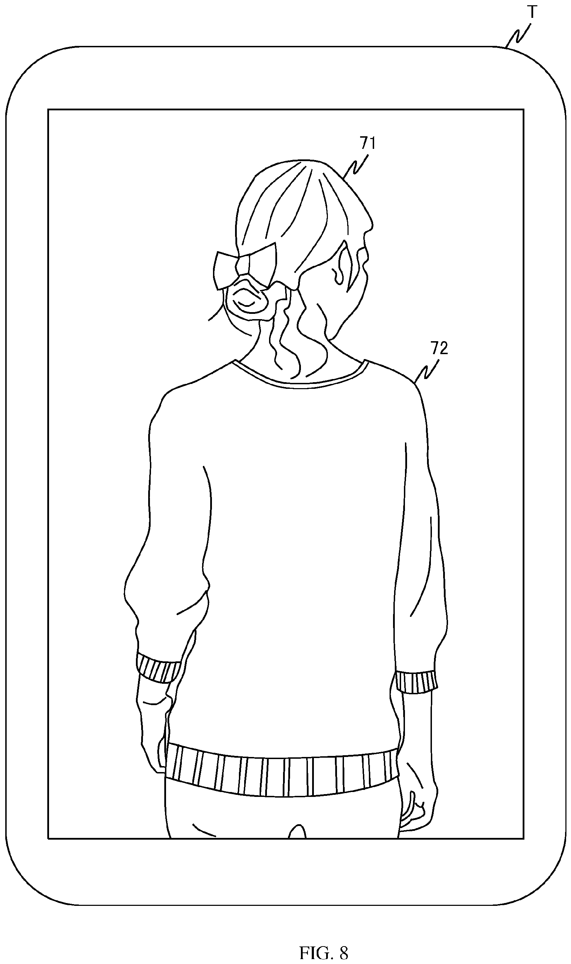

FIG. 8 is a schematic diagram showing an example of a screen of the communication terminal T displaying the worn garment image transmitted by the image transmission part 39 according to the embodiment. In FIG. 8, a person 70 denoted by a reference number 70 is a fashion model of the body shape close to the body shape information acquired by the body shape information acquisition part 32. Also, garment 71 denoted by a reference number 71 is an image of the garment whose size and shape are close to the garment to be manufactured on the basis of the production information acquired by the production information acquisition part 33. By looking at the worn garment image displayed on the communication terminal T at hand, the orderer U can easily check a visual representation of the manufactured garment.

It should be noted that FIG. 8 shows an example of a case where the worn garment image acquisition part 38 acquires an image of a real fashion model wearing a real garment. In place of this, the worn garment image acquisition part 38 may generate a virtual worn garment image by superimposing the garment image generated on the basis of the production information acquired by the production information acquisition part 33 on an avatar image generated on the basis of the body shape information acquired by the body shape information acquisition part 32. Also, the worn garment image acquisition part 38 may generate an image that three-dimensionally shows the worn garment while the avatar image itself is made transparent. The worn garment image acquisition part 38 can generate the worn garment image by using a known computer graphics (CG) technique. By using the CG technique, the worn garment image acquisition part 38 can generate the image that accurately incorporates the production information and the body shape information.

### <Flowchart of a garment production management process executed by the garment production management apparatus 1>

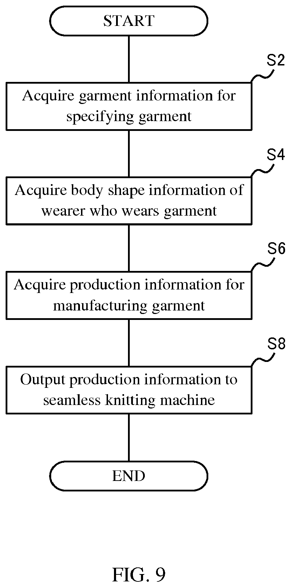

FIG. 9 is a flowchart illustrating a garment production management process executed by the garment production management apparatus 1 according to the embodiment. The process of this flowchart starts when, for example, a power source of the garment production management apparatus 1 is turned on.

The garment information acquisition part 31 acquires the garment information that specifies the garment selected by the orderer U from the communication terminal T of the orderer U via the network (S2). The body shape information acquisition part 32 acquires the body shape information of the wearer who wears the garment selected by the orderer U from the communication terminal T of the orderer U via the network (S4).

The production information acquisition part 33 acquires the production information that makes the seamless knitting machine 3 manufacture the garment on the basis of the garment information and the body shape information (S6). The production information output part 34 outputs the production information acquired by the production information acquisition part 33 to the seamless knitting machine 3 via the seamless knitting machine control apparatus 2 (S8). When the production information output part 34 outputs the production information, the process of this flowchart ends.

### <Functional configuration of the seamless knitting machine control apparatus 2>

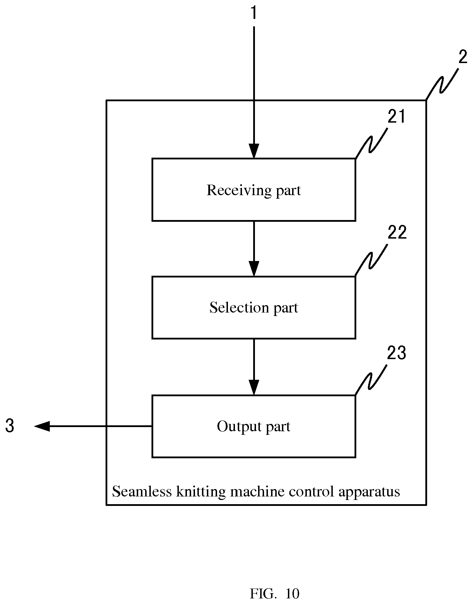

FIG. 10 is a schematic diagram showing a functional configuration of the seamless knitting machine control apparatus 2. The seamless knitting machine control apparatus 2 includes a receiving part 21, a selection part 22, and an output part 23.

The receiving part 21 receives (i) the production information for manufacturing the garment and (ii) the information about the delivery destination or the delivery location of the manufactured garment from the garment production management apparatus 1. The selection part 22 selects the seamless knitting machine 3 that manufactures the garment on the basis of the production information received by the receiving part 21 from among the plurality of seamless knitting machines 3. Here, the selection part 22 selects the seamless knitting machine 3 installed at a location closest to the delivery destination or the delivery location of the manufactured garment from among the seamless knitting machines 3 that can manufacture the garment on the basis of the production information received by the receiving part 21. The output part 23 outputs the production information received by the receiving part 21 to the seamless knitting machine 3 selected by the selection part 22. By doing this, the seamless knitting machine control apparatus 2 can make the seamless knitting machine 3 manufacture the garment.

### <Managing order history and recycling history>

With reference to FIG. 1 again, the product management apparatus 6 will be described. The product management apparatus 6, in a similar manner as with the garment production management apparatus 1, is also realized by calculation resources of cloud computing such as the cloud server.

The garment production management apparatus 1 can receive orders for garments from the plurality of orderers U. For this reason, the product management apparatus 6 manages pieces of orderer information for uniquely specifying each of the orderers U in association with the respective orderers. Also, the product management apparatus 6 manages the garment that the seamless knitting machine 3 manufactured in association with the order information of the orderer who selected that garment.

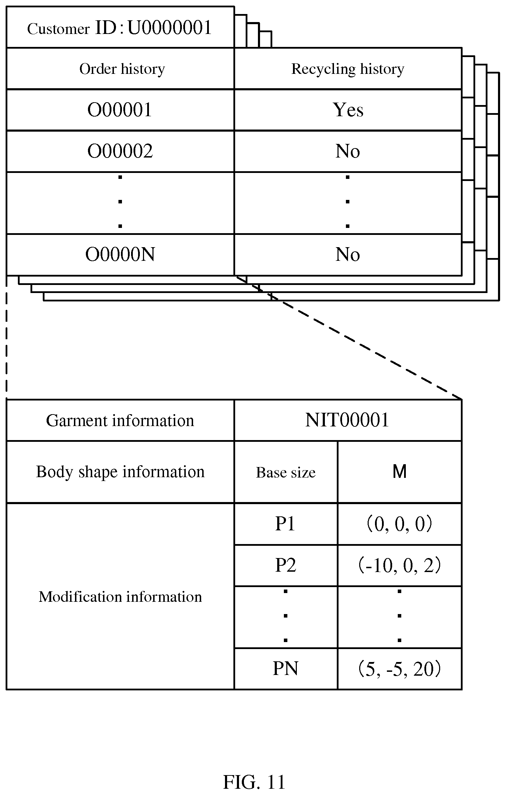

FIG. 11 is a schematic diagram showing a data structure of a history management database according to the embodiment. The history management database is stored in a storage device that is a part of the calculation resources of cloud computing service and managed by the product management apparatus 6.

As shown in FIG. 11, in the history management database, the order history is associated with and stored for each customer identification (ID) allotted to each orderer U. It should be noted that the customer ID corresponds to the above-mentioned orderer information. The example shown in FIG. 11 indicates that the customer identified with the customer ID U0000001 placed the orders specified with the order numbers O00001 to O0000N in the past.

Here, the "order number" is the number allotted in order to specify the garment that a certain orderer U ordered in the past. For each order number, as shown in FIG. 11, (i) the garment information for identifying the ordered garment, (ii) the body shape information of the wearer of that garment, and (iii) the modification information for modifying the production information that serves as the base are associated. For example, the example shown in FIG. 11 indicates that, in the case of the order identified with O0000N, the garment whose garment information is specified with NIT00001 was ordered. It also indicates that the base size of the garment in this order is size M, and the components of modification vectors for each position coordinate of the garment are indicated.

If the orderer U provides the garment that the seamless knitting machine 3 manufactured in the past to the garment made-to-order system S so as to be used as materials for recycling, the product management apparatus 6 stores the order number of the provided garment in association with the customer ID of the orderer U to the history management database. For example, in the example shown in FIG. 11, the garment specified with the order number O00001 is recycled.

By doing this, the product management apparatus 6 can manage a recycling history of the orderer U. With the product management apparatus 6 managing the recycling history of the orderer U, for example, the price determination part 36 of the garment production management apparatus 1 can offer services such as reducing the price of a garment the orderer U newly placed an order for, reducing a delivery fee of the manufactured garment, and the like.

As described above, the garment made-to-order system S according to the embodiment can reduce waste in production and distribution processes of garments. In particular, because the garment made-to-order system S adopts the made-to-order system in which a garment is manufactured by a seamless knitting machine 3 after receiving an order for the garment from an orderer U, deadstock of garments can be reduced. Also, because the seamless knitting machine 3 produces garments, disposal of materials due to cutting and the like can be suppressed.

Furthermore, because the garment production management apparatus 1 modifies the production information of garments on the basis of the body shape information of the wearer of the garment, it can manufacture a garment that fits the body shape of the wearer even if the body shape of the wearer of the garment does not match any sizes of standard products. Also, because the material cost of a garment can be directly reflected in the price of the garment, the sense of price unfairness caused by the small size garments and the large size garments being priced the same can be suppressed.

The present invention has been described above on the basis of the exemplary embodiments. The technical scope of the present invention is not limited to the scope explained in the above embodiments, and it is obvious to those skilled in the art that various changes and modifications within the scope of the invention may be made. An aspect to which such changes and modifications are added can be included in the technical scope of the present invention is obvious from the description of the claims. Such variation examples will be described below.

### <Variation Example 1>

Cases where the garment information acquisition part 31 acquires the garment information to specify the garment the orderer U has selected and the body shape information acquisition part 32 acquires the body shape information of the wearer who wears the garment from the orderer U were explained above. The pieces of information respectively acquired by the garment information acquisition part 31 and the body shape information acquisition part 32 may be accumulated and managed in the history management database.

Specifically, the history management database further stores the garment information that specifies the garment that the orderer U selected and the body shape information (including information that indicates age of the wearer such as date of birth) in association with a residential area of the orderer U or the wearer. These pieces of information accumulated in an order history management database may serve as data for statistically analyzing a distribution of the wearers' body shapes for each area and a distribution of preferences of garments for each area. By providing an analysis result to manufactures and distributors of garments in each area, the operator of the garment made-to-order system S can incorporate the analysis results into production schedule, stock management, and the like of the garments in each area. As a result, a reduction of waste in production and distribution processes of garments in various places can be expected.

### <Variation Example 2>

Cases where the body shape information the body shape information acquisition part 32 acquired from the orderer U was used only within the garment made-to-order system S were explained above. In addition to this, the body shape information the body shape information acquisition part 32 acquired from the orderer U may be provided to other garment production management apparatuses and garment distribution management apparatuses.

Recently, services for selling garments on a browser via a network such as the Internet are widely used, and it is common for a user of these services to perform a user authentication with an individual user ID, password, and the like in each service. In the garment made-to-order system S according to the embodiment, a customer ID for accessing the garment production management apparatus 1 is also allotted to each orderer U. By disclosing the customer ID as a user ID for other services, the garment made-to-order system S permits an apparatus providing other services to access the history management database. In other services, their users can save the trouble of inputting body shape information because the body shape information of the wearer can be acquired from the history management database.

### <Variation Example 3>

Cases where the garment production management apparatus 1, the seamless knitting machine control apparatus 2, and the product management apparatus 6 are different apparatuses were mainly explained above. However, these apparatuses do not need to be the different apparatuses. They may be the same apparatus and may be realized by the same calculation resources of cloud computing.

### <Variation Example 4>

An outline of Variation Example 4 will be explained. In general, physical property values of materials required to manufacture garments change depending on environments where the materials are placed. Also, if materials required to manufacture garments are used for manufacturing garments, naturally, these materials are depleted.

Here, the "materials of garments" are mainly yarns that the seamless knitting machine 3 uses. Also, the wording "environments where the materials are placed" represents temperature and humidity of the location where the yarns are placed, age deterioration of the yarns, dyeing conditions, and the like. The "physical property values of materials" include (i) a measurement value of yarn obtained in a state where the yarn is set in the seamless knitting machine 3 and (ii) a measurement value obtained by measuring yarn alone, without setting it in the seamless knitting machine 3. It is said that the variation in the measurement values due to the environment difference tends to be larger with natural fibers than with synthetic fibers.

Specific examples of the measurement values of yarn obtained in the state where the yarn is set in the seamless knitting machine 3 are: fineness, tension, a cross-sectional area or a width of fiber, fraying state, and official moisture regain. Also, examples of the measurement values obtained by measuring yarns alone, without setting them in the seamless knitting machine 3 are: fineness, tensile stress, yield point elongation and rupture elongation, elastic modulus, and official moisture regain. In addition, weight of the yarn can be measured, and a remaining amount of the yarn can also be estimated from the weight.

In the seamless knitting machine 3, the yarns, as the materials of garments, are wound on bobbins and set in the seamless knitting machine 3. The seamless knitting machine 3 applies the tension determined by a preset parameter onto the yarn and manufactures a garment at a knitting speed determined by the parameter. Furthermore, the seamless knitting machine 3 knits the garment by forming loops with a loop length determined by the parameter.

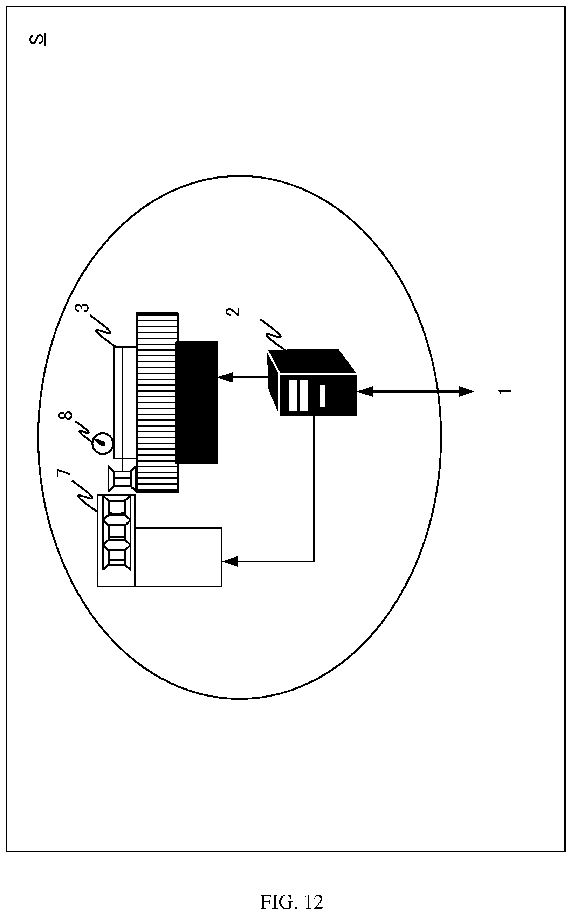

Here, the parameter set to the seamless knitting machine 3 should be changed, as appropriate, depending on the measurement values of yarn as the material of garments. In the garment made-to-order system S according to Variation Example 4, the garment production management apparatus 1 changes the parameters to be set to the seamless knitting machine 3 depending on the variation of the measurement value of the yarn serving as the material of the garments that the seamless knitting machine 3 manufactures. The change of parameters to be set to the seamless knitting machine 3 will be explained below by referring to FIGS. 12, 13, and 14.

FIG. 12 is a schematic diagram mainly showing the periphery of the seamless knitting machine 3 of the garment made-to-order system S according to Variation Example 4 of the embodiment. The garment made-to-order system S according to Variation Example 4 includes a material supply apparatus 7 that adds yarns, which are materials, to the seamless knitting machine 3 and a material measurement apparatus 8 that obtains measurement values by measuring the materials. It should be noted that FIG. 12 shows only a configuration for explaining the garment made-to-order system S according to Variation Example 4, and other configurations are omitted.

The material supply apparatus 7 supplies yarns to the seamless knitting machine 3 under control of at least one of the seamless knitting machine control apparatus 2 and the garment production management apparatus 1. Specifically, the yarns are additionally supplied to the seamless knitting machine 3 when the amount of yarns initially set in the seamless knitting machine 3 becomes equal to or less than a predetermined amount as the seamless knitting machine 3 manufactures the garments.

The material measurement apparatus 8 obtains the measurement values that are obtained by measuring the yarns in the state where the yarns are set in the seamless knitting machine 3. Also, although not shown in FIG. 12, the material measurement apparatus 8 also obtains the measurement values that are obtained by measuring yarns alone, without setting them in the seamless knitting machine 3. It should be noted that when measuring the yarns alone, without setting them in the seamless knitting machine 3, the material measurement apparatus 8 records a measurement position of the yarns. The material measurement apparatus 8 transmits the obtained measurement values to the garment production management apparatus 1 via the seamless knitting machine control apparatus 2.

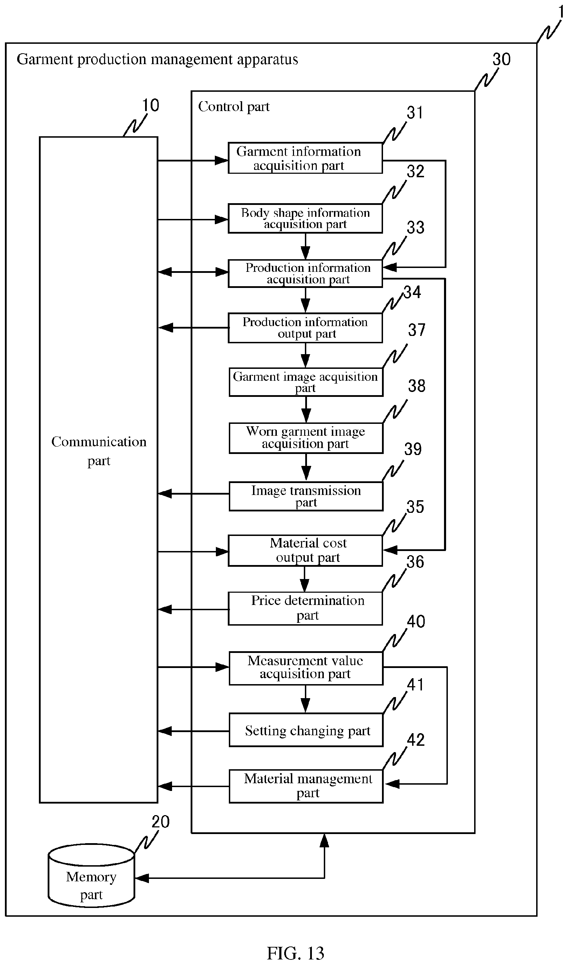

FIG. 13 is a schematic diagram showing a functional configuration of the garment production management apparatus 1 according to Variation Example 4 of the embodiment. When compared, the garment production management apparatus 1 shown in FIG. 13 is different from the garment production management apparatus 1 according to the embodiment shown in FIG. 2 in that the garment production management apparatus 1 shown in FIG. 13 includes a measurement value acquisition part 40, a setting changing part 41, and a material management part 42. Hereinafter, an explanation concerning the same configuration as that of the garment production management apparatus 1 according to the embodiment will be simplified or omitted as appropriate.

The measurement value acquisition part 40 acquires a measurement value of the materials obtained by measuring the materials to be used for manufacturing the garment. As described above, the materials to be used for manufacturing the garment are yarns. The measurement value acquisition part 40 acquires, via the seamless knitting machine control apparatus 2, the measurement values that the material measurement apparatus 8 acquired by measuring the materials.

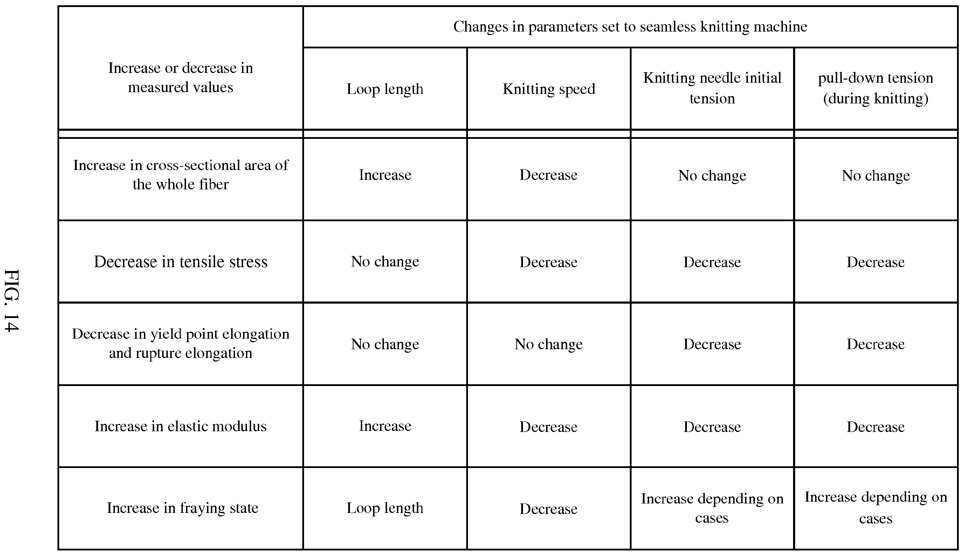

The setting changing part 41 changes parameters to be set to the seamless knitting machine 3 in order to manufacture the garment on the basis of variations of measurement values obtained by the measurement value acquisition part 40. FIG. 14 is a table showing a relationship between measurement values of yarns, which are materials, and changes in parameters set to the seamless knitting machine 3. Specifically, as the changes in measurement values of yarns, the table shown in FIG. 14 includes "cross-sectional area of the whole fiber", "a decrease in tensile stress", "a decrease in yield point elongation and rupture elongation", "an increase in elastic modulus", and "an increase in fraying state". Also, as the setting parameters of the seamless knitting machine 3, the table shown in FIG. 14 includes "loop length", "knitting speed", "knitting needle initial tension", and "pull-down tension during knitting".

For example, if fineness of a fiber, which the seamless knitting machine 3 is knitting, acquired by the measurement value acquisition part 40 increases, in other words the cross-sectional area of the whole fiber increases, the setting changing part 41 increases the loop length to be set to the seamless knitting machine 3 and changes "knitting speed", "knitting needle initial tension", and "pull-down tension during knitting" depending on the situation. This prevents the seamless knitting machine 3 from finishing the garment in a state where no loops are formed in the fabric.

Similarly, if tensile stress of a fiber, which the seamless knitting machine 3 is knitting, acquired by the measurement value acquisition part 40 decreases, the setting changing part 41 decreases the "loop length" and respectively changes the "knitting speed", "knitting needle initial tension", and "pull-down tension during knitting" depending on the situation. This suppresses an occurrence of yarn break when the seamless knitting machine 3 is knitting the garment.

If elastic modulus of a fiber, which the seamless knitting machine 3 is knitting, acquired by the measurement value acquisition part 40 increases, the setting changing part 41 increases the "loop length" and respectively decreases the "knitting speed", "knitting needle initial tension", and "pull-down tension during knitting". This prevents the seamless knitting machine 3 from finishing the garment in a state where no loops are formed in the fabric. Furthermore, if fraying of a fiber, which the seamless knitting machine 3 is knitting, acquired by the measurement value acquisition part 40 increases, the setting changing part 41 increases the "loop length" and decreases the "knitting speed". This prevents the seamless knitting machine 3 from finishing the garment in a state where no loops are formed in the fabric or in a state where a front body and a back body of the fabric are bonded.

Accordingly, the garment production management apparatus 1 according to Variation Example 4 changes the parameters to be set to the seamless knitting machine 3 depending on the variations of the measurement values of the yarn, as the materials of the garments that the seamless knitting machine 3 manufactures. By doing this, the seamless knitting machine 3 can be properly set according to the state of the yarn.

Next, measuring of yarn by the measurement value acquisition part 40 will be described in more detail. The yarns, as the materials of garments, are wound on the bobbins and set in the seamless knitting machine 3. Here, measurement values of a yarn wound on the same bobbin may differ depending on which position of the yarn the measurement value acquisition part 40 would measure. For this reason, the measurement value acquisition part 40 acquires a plurality of measurement values relevant to the yarn together with the measurement position of the yarn. The setting changing part 41 changes the parameters on the basis of the measurement values that correspond to the measurement positions of the yarn supplied to a knitting portion in the seamless knitting machine 3. Here, the "knitting portion" represents a portion where knitting work is actually performed in the seamless knitting machine 3. Because the parameters are adjusted on the basis of the measurement values of the yarn for the portion where knitting work is actually performed, the garment production management apparatus 1 can set the parameters suitable for state of the yarn.

On the basis of the production information acquired by the production information acquisition part 33, the measurement value acquisition part 40 can calculate an amount of materials required to manufacture a garment in advance. The amount of materials required to manufacture the garment is a unit amount of yarn required to manufacture the garment. For each unit amount required to manufacture an individual garment, the measurement value acquisition part 40 may acquire measurement values from the beginning to the end of the yarn in advance. In this case, the setting changing part 41 changes parameters every time the individual garment is manufactured on the basis of the measurement values for each unit amount required to manufacture the garment.

That is, the garment production management apparatus 1 changes the parameters to be set to the seamless knitting machine 3 for each garment that the seamless knitting machine 3 manufactures. If the measurement values of yarns to be used for manufacturing the garment are relatively stable, the change of parameter can be suppressed, and therefore the garment production management apparatus 1 can improve garment production speed of the seamless knitting machine 3.

Also, the measurement value acquisition part 40 may acquire the measurement values of yarns at a position before the knitting portion while yarns are supplied to the knitting portion of the seamless knitting machine 3. In this case, the setting changing part 41 changes the parameters to be set to the seamless knitting machine 3 while the measurement value acquisition part 40 acquires the measurement values. By doing this, the parameters are adjusted on the basis of the measurement values at the position of the yarns where knitting is actually performed, and so the garment production management apparatus 1 can set parameters more suitable for the status of the yarns.

It should be noted that the measurement value acquisition part 40 acquires the measurement values of the materials in an environment where the seamless knitting machine 3 for manufacturing garments is set. If the measurement value acquisition part 40 is set in the seamless knitting machine 3 that actually produces garments, the environment of measuring materials and the environment where the seamless knitting machine 3 is set are the same.

On the other hand, if the location for measuring materials where the measurement value acquisition part 40 measures yarns and the location where the seamless knitting machine 3 for manufacturing garments by using the yarns as materials is set are different, the environment of the location for measuring the materials is matched to the environment of the location where the seamless knitting machine 3 is set. Specifically, the conditions such as temperature, humidity, or luminance of the location for measuring materials are matched to the temperature, humidity, or luminance of the location where the seamless knitting machine 3 is set.

By doing this, the measurement value acquisition part 40 can acquire measurement values of yarns corresponding to the environment where the yarns are actually used. In particular, in order to measure physical values that are difficult to be measured while yarns are used by the seamless knitting machine 3, the measurement value acquisition part 40 measures yarns at a location different from the location where the seamless knitting machine 3 is set. By matching the environment of measuring materials and the environment where the seamless knitting machine 3 is set, the measurement value acquisition part 40 can use the physical values that are difficult to be measured while yarns are used by the seamless knitting machine 3 for adjusting parameters of the seamless knitting machine 3.

It should be noted that the measurement value acquisition part 40 can acquire the weight of yarns used in the seamless knitting machine 3 from the material measurement apparatus 8. If the seamless knitting machine 3 produces garments by using yarns, the weight of yarns necessarily decreases. Accordingly, the material management part 42 outputs instructions for adding materials to the seamless knitting machine 3 to the material supply apparatus 7 when the weight of yarns acquired by the measurement value acquisition part 40 becomes equal to or less than a predetermined weight.

Here, "a predetermined weight" is a weight corresponding to "a threshold value for adding materials" that the material management part 42 refers to in order to determine whether materials should be added to the seamless knitting machine 3. Specific values of the threshold value for adding materials can be determined in experiments depending on density of yarns that the seamless knitting machine 3 uses or types of garments that the seamless knitting machine 3 produces. By doing this, the garment production management apparatus 1 can prevent the seamless knitting machine 3 from stopping manufacturing garments due to a lack of yarns.

### <Variation Example 5>

In the explanation of the garment made-to-order system S of the variation example 4, the garment production management apparatus 1 changed the parameters set to the seamless knitting machine 3 on the basis of the variations of the measurement values of yarns as materials. Alternatively or additionally, regarding at least any of the parameters, the seamless knitting machine control apparatus 2 may change the parameters set to the seamless knitting machine 3 on the basis of the variations of the measurement values of yarns. Since the seamless knitting machine control apparatus 2 can communicate with the seamless knitting machine 3 without using a network, this configuration is advantageous in a point that the influence of the network communication environment is smaller than in a case where the garment production management apparatus 1 changes parameters.

### [Description of the reference numerals]

- 1: garment production management apparatus
- 2: seamless knitting machine control apparatus
- 21: receiving part
- 22: selection part
- 23: output part
- 3: seamless knitting machine
- 4: plant
- 5: store
- 6: product management apparatus
- 7: material supply apparatus
- 8: material measurement apparatus
- 10: communication part
- 20: memory part
- 21: receiving part
- 22: selection part
- 23: output part
- 30: control part
- 31: garment information acquisition part
- 32: body shape information acquisition part
- 33: production information acquisition part
- 331: body surface coordinate calculation part
- 332: difference data calculation part
- 333: modification part
- 34: production information output part
- 35: material cost output part
- 36: price determination part
- 37: garment image acquisition part
- 38: worn garment image acquisition part
- 39: image transmission part
- 40: measurement value acquisition part
- 41: setting changing part
- 42: material management part
- S: garment made-to-order system
- T: communication terminal

## Claims

1. A garment production management apparatus, comprising:
a garment information acquisition part that acquires garment information to specify a garment an orderer has selected;
a body shape information acquisition part that acquires body shape information of a wearer who wears the garment;
a production information acquisition part that acquires production information of the garment on the basis of the garment information and the body shape information; and
a production information output part that outputs the production information to a seamless knitting machine.

2. The garment production management apparatus according to Claim 1, wherein the production information acquisition part selects production information on the basis of the body shape information from among a plurality of different pieces of production information associated with the garment information.

3. The garment production management apparatus according to Claim 1 or 2, wherein the production information acquisition part modifies the production information that serves as a base of the garment associated with the garment information on the basis of the body shape information.

4. The garment production management apparatus according to Claim 1, wherein the production information acquisition part selects production information on the basis of the body shape information from among a plurality of different pieces of production information that is associated with the garment information, and modifies the selected production information on the basis of the body shape information.

5. The garment production management apparatus according to any one of Claims 1 to 4, wherein the body shape information acquisition part acquires height, weight, and gender of the wearer as the body shape information via a communication terminal of the orderer.

6. The garment production management apparatus according to Claim 5, wherein the body shape information acquisition part further acquires age of the wearer via the communication terminal of the orderer.

7. The garment production management apparatus according to Claim 5 or 6, wherein the body shape information acquisition part further acquires body fat percentage of the wearer via the communication terminal of the orderer.

8. The garment production management apparatus according to any one of Claims 5 to 7, wherein the body shape information acquisition part further acquires the number of weeks of pregnancy of the wearer via the communication terminal of the orderer.

9. The garment production management apparatus according to any one of Claims 5 to 8, wherein the body shape information acquisition part further acquires physical features of the wearer via the communication terminal of the orderer.

10. The garment production management apparatus according to any one of Claims 1 to 9, wherein the production information acquisition part
selects (i) pieces of production information that match the body shape information from among different pieces of production information associated with the garment information and (ii) pieces of image data of garments that correspond to the selected pieces of production information, and
selects one piece of production information that corresponds to one piece of image data out of the pieces of image data that the orderer selected from among the pieces of image data transmitted to the communication terminal of the orderer.

11. The garment production management apparatus according to any one of Claims 1 to 9, wherein the production information includes position coordinates in three-dimensional space of each part of the garment, and
the production information acquisition part includes:
a body surface coordinate calculation part that calculates position coordinates in the three-dimensional space of a body surface of the wearer on the basis of the body shape information;
a difference data calculation part that calculates difference data between (i) the position coordinates of each part of the garment and (ii) position coordinates of the body surface that correspond to the position coordinates; and
a modification part that modifies the production information of the garment on the basis of the difference data.

12. The garment production management apparatus according to any one of Claims 1 to 11, further comprising:
a worn garment image acquisition part that acquires a worn garment image in a case where the garment, produced on the basis of the production information, is worn by a model acquired on the basis of the body shape information; and
an image transmission part that transmits the worn garment image to the communication terminal of the orderer.

13. The garment production management apparatus according to Claim 12, wherein the worn garment image acquisition part generates a worn garment image by superimposing the garment image generated on the basis of the production information on an avatar image generated on the basis of the body shape information.

14. The garment production management apparatus according to any one of Claims 1 to 13, further comprising:
a material cost calculation part that calculates material cost of the garment on the basis of the production information;
a price determination part that determines the price of the garment on the basis of the material cost and type of the seamless knitting machine that is used to manufacture the garment.

15. The garment production management apparatus according to any one of Claims 1 to 14, further comprising:
a measurement value acquisition part that acquires a measurement value of material obtained by measuring the material to be used for manufacturing the garment; and
a setting changing part that changes parameters to be set to the seamless knitting machine in order to manufacture the garment on the basis of variations of measurement values.

16. The garment production management apparatus according to Claim 15, further comprising:
a material management part that outputs instructions for adding materials to the seamless knitting machine to the material supply apparatus when the weight of materials acquired by the measurement value acquisition part becomes equal to or less than a predetermined weight.

17. The garment production management apparatus according to Claim 15 or 16, wherein the material used for manufacturing the garment is yarn,
the measurement value acquisition part acquires a plurality of measurement values that includes measurement positions of the yarn, and
the setting changing part changes the parameters on the basis of the measurement values that correspond to the measurement positions of the yarn supplied to a knitting portion in the seamless knitting machine.

18. The garment production management apparatus according to Claim 17, wherein the measurement value acquisition part acquires measurement values from the beginning to the end of the yarn in advance for each unit amount required to manufacture individual garment, and
the setting change part changes the parameters every time the individual garment is manufactured on the basis of the measurement values for each unit amount required to manufacture the garment.

19. The garment production management apparatus according to Claim 17 or 18, wherein the measurement value acquisition part acquires the measurement values of yarn at a position before the knitting portion while the yarn is supplied to the knitting portion, and the setting change part changes the parameters while the measurement value acquisition part acquires the measurement values.

20. The garment production management apparatus according to any one of Claims 15 to 18, wherein the measurement value acquisition part acquires the measurement value of the material in an environment where the seamless knitting machine for manufacturing garments is set.

21. A garment production management method, performed by a processor, comprising steps of:
acquiring garment information to specify a garment an orderer has selected;
acquiring body shape information of a wearer who wears the garment;
acquiring the production information of the garment on the basis of the garment information and the body shape information; and
outputting the production information to a seamless knitting machine.

22. A program that causes a computer to perform functions of:
acquiring garment information to specify a garment an orderer has selected;
acquiring body shape information of a wearer who wears the garment;
acquiring the production information of the garment on the basis of the garment information and the body shape information; and
outputting the production information to a seamless knitting machine.

23. A garment made-to-order system, comprising:
a garment production management apparatus that can communicate with communication terminals of each of a plurality of orderers;
a seamless knitting machine control apparatus that can communicate with the garment production management apparatus; and
a plurality of seamless knitting machines that operate under control of the seamless knitting machine control apparatus, wherein
the garment production management apparatus includes:
a garment information acquisition part that acquires garment information to specify a garment each of the orderers has selected via the communication terminals;
a body shape information acquisition part that acquires body shape information of a wearer who wears the garment via the communication terminals;
a production information acquisition part that acquires the production information of the garment on the basis of the garment information and the body shape information; and
a production information output part that outputs the production information to a seamless knitting machine,
the seamless knitting machine control apparatus includes:
a receiving part that receives the production information from the garment production management apparatus;
a selection part that selects a seamless knitting machine that manufactures the garment on the basis of the production information from among the plurality of seamless knitting machines; and
an output part that outputs the production information to the selected seamless knitting machine, and
each of the plurality of seamless knitting machines manufactures garments on the basis of the production information received from the seamless knitting machine control apparatus.

24. The garment made-to-order system according to Claim 23, further comprising:
a product management apparatus that associates an garment that the seamless knitting machine manufactured with an orderer information for uniquely specifying the orderer who selected the garment.

25. The garment made-to-order system according to Claim 24, wherein the product management apparatus, if the orderer provides the garment that the seamless knitting machine manufactured in the past so as to be used as materials for recycling, manages the provided garment and orderer information of the orderer in association with each other.
